# EUROPÄISCHE PATENTSCHRIFT

(11) **EP 0 857 900 B1**
(45) Veröffentlichungstag und Bekanntmachung des Hinweises auf die Patenterteilung: **06.08.2003**
(21) Anmeldenummer: 97118230.8
(22) Anmeldetag: 21.10.1997
(51) Int. Cl.: F16J 9/20

(54) **Ölabstreifkolbenring für Brennkraftmaschinen**
Piston oil-scraping ring for internal combustion engines
Bague racleuse de piston pour moteurs à combustion interne

(30) Priorität: 08.02.1997 DE 19704754
(43) Veröffentlichungstag der Anmeldung: 12.08.1998
(73) Patentinhaber: Federal-Mogul Burscheid GmbH, 51399 Burscheid (DE)
(72) Erfinder: Brillert, Hans-Rainer, Dipl.-Phys., 51399 Burscheid (DE)

(56) Entgegenhaltungen:
- EP-A- 0 711 630
- CH-A- 510 823
- FR-A- 1 493 705
- US-A- 2 587 888
- US-A- 2 776 865
- US-A- 4 741 543
- PATENT ABSTRACTS OF JAPAN vol. 009, no. 139 (M-387), 14.Juni 1985 & JP 60 018663 A (RIKEN KK), 30.Januar 1985,

## Beschreibung

Die Erfindung betrifft einen Ölabstreifkolbenring bestehend aus einem ringförmig gebogenen Metallband mit einem nach radial außen hin offenem U-förmigen Querschnittsprofil zur Verwendung als Spreizfederring und einem flachen, geschlitzten axial niedrigen Ring, insbesondere für Brennkraftmaschinen, wobei der Spreizfederring alternierend von den Längsseiten sich erstreckende Einschnitte aufweist, so daß radial gerichtete federnde Schenkel gebildet sind, die über Stege miteinander verbunden sind wobei die Schenkel (7) sich radial mindestens über die halbe radiale Tiefe des Rings erstrecken.

Ölabstreifkolbenringe, die aus einem nach außen offenen, im Querschnitt U-förmig profiliertem, ringförmig gebogenem Metallband bestehen, sind vielfach bekannt.

Aus der DE PS 27 11 018 ist ein Ölabstreifkolbenring aus einem solchen gebogenen Metallband zu entnehmen. Der aus dem Metallband gebogene Spreizfederring kann direkt als Ölabstreifring fungieren oder als Spreizfederring für zwei axial niedrige Ringe, die auf radial gerichteten Schenkeln aufliegen.
Derartige Ölabstreifringe weisen eine axiale Höhe von ca. 2 mm auf.
Da Ölabstreifkolbenringe mit einer definierten Flächenpressung an die Zylinderwand angedrückt werden müssen, um eine ausreichende Ölabstreifwirkung zu erzielen, ist eine gewisse axiale Bauhöhe notwendig. Bauhöhen unter 1,5 mm sind mit 3-teiligen Systemen nicht mehr realisierbar.
Bei einteiligen Konstruktionen, bestehend nur aus dem Spreizfederring, wäre eine Bauhöhe unter 1,5 mm denkbar, jedoch gleiten an der Zylinderwand die unterbrochenen Randflächen der radial gerichteten Schenkel . Diese periodischen Unterbrechungen bilden unerwünschte Öffnungen an der Lauffläche, an denen kein Öl abgestreift wird.

Um dieses Problem zu beseitigen ist es auch bereits bekannt, ein 2-teiliges Ölabstreifkolbenringsystem zu verwenden. Die DE 33 39 708 C1 offenbart einen axial extrem niedrig bauenden Ölabstreifkolbenring, bestehend aus einem niedrigen Metallbandring und einem Federring. Der Federring ist axial unterhalb des Stahlbandrings angeordnet und drückt den Stahlbandring sowohl gegen die Zylinderwand als auch gegen die Nutflanke des Kolbens.
Es hat sich gezeigt, daß derartige Systeme durch die unsymmetrische Krafteinleitung in das Gesamtsystem in der Kolbennut verklemmen und damit radial unbeweglich werden, wodurch die Funktion beeinträchtigt wird.
Auch Kolbenringe gemäß der US 2776865 weisen das Problem auf, das die radiale Beweglichkeit der Abreifringe behindert wird. Durch das vorhandensein eines Abstandshalter werden die Abstreifringe gegen die Kolbennutflanken gedrückt, die dabei auftretenden Reibungskräfte verhindern eine ausreichende radiale Beweglichkeit. Darüber hinaus ist ein axial groß bauendes Kolbenringssystem geschaffen, dass für moderne Motoren nicht mehr geeignet ist.

Der Erfindung liegt die Aufgabe zugrunde einen gattungsgemäßen Ölabstreifkolbenring dahingehend zu verbessern, daß bei extrem niedriger axialer Bauhöhe eine verbesserte Abstreifwirkung erzielt wird.
Diese Aufgabe wird erfindungsgemäß durch die kennzeichnenden Merkmale des Patentanspruch 1 gelöst. Vorteilhafte Ausgestaltungen der Erfindung sind in den Unteransprüchen dokumentiert.
Auf diese Weise übernimmt der Ring die Funktion des ölabstreifenden Bauteils. An der Zylinderwand liegt eine geschlossene Umfangsfläche (bis auf den Stoßbereich) an, die eine gute abstreifende Wirkung besitzt.
Die Schenkel des Spreizfederrings halten den Ring des Betriebes nahezu senkrecht zur Zylinderwand, durch die symmetrische Krafteinleitung ist ein Verklemmen innerhalb der Kolbennut ausgeschlossen.

Die Erfindung ist anhand eines Ausführungsbeispiels in der Zeichnung dargestellt und wird im folgenden näher erläutert.

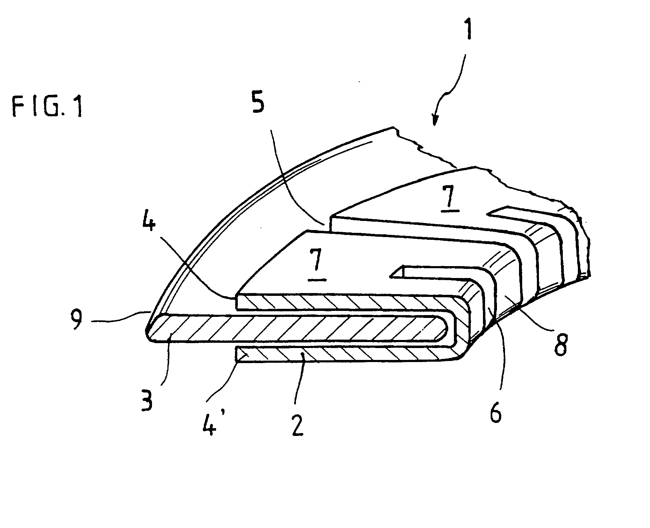

Die Figur 1 zeigt einen erfindungsgemäßen Ölabstreifkolbenring (1), bestehend aus einem im Querschnitt U-förmigem profiliertem Metallband hergestellten Spreizring (2) und einem geschlitzten axial niedrigen Ring (3), ebenfalls aus Stahlband.
Der Spreizring (2) weist von den Längsseiten (4, 4') sich erstreckende Einschnitte (5, 6) auf, so daß radial gerichtete Schenkel (7) gebildet sind, die über Stege (8) miteinander verbunden sind. Die Lauffläche (9) des Rings (3), ist konisch ausgebildet und der Ring erstreckt sich innerhalb des durch das U-förmige Querschnittsprofil gebildeten Raumes. Im eingebauten Zustand berühren die Längsseiten (4, 4') des Spreizringes (2) die Zylinderwandung (nicht dargestellt) nicht.
Durch die Einschnitte (5, 6) ist der Spreizring (2) in Umfangsrichtung federnd gestaltet Im eingebauten Zustand wird der Spreizring (2) auf einen kleineren Durchmesser gespannt, indem er in Umfangsrichtung zusammengedrückt wird. Die hierdurch entstehende radiale Federkraft drückt den Ring (3) radial gegen die Zylinderwand. Durch den eingelegten Ring (3) können die Schenkel (7) sich nicht axial verbiegen, gleichzeitig wird der Ring (3) axial gut geführt.
Durch die spezielle Wandung des Ringes (3) wird trotz geringer axialer Höhe des Systems eine ausreichende Flächenpressung und damit die erforderliche Ölabstreifwirkung erzielt.

## Patentansprüche

1. Ölabstreifkolbenring bestehend aus einem ringförmig gebogenem Metallband mit einem nach radial außen hin offenem U-förmigen Querschnittsprofil zur Verwendung als Spreizfederring und einem flachen, geschlitzten axial niedrigen Ring, insbesondere für Brennkraftmaschinen, wobei der Spreizfederring alternierend von den Längsseiten sich erstreckende Einschnitte aufweist, so daß radial gerichtete federnde Schenkel gebildet sind, die über Stege miteinander verbunden sind, wobei die Schenkel (7) sich radial mindestens über die halbe radiale Tiefe des Rings (3) erstrecken, **dadurch gekennzeichnet**, der der Ring (3) mit axialem Spiel im Bereich von 10 bis 100 µm innerhalb des durch das U-förmige Querschnittsprofil gebildeten Raumes angeordnet ist, derart, daß im eingebauten Zustand nur der Ring (3) in Gleitkontakt mit der Zylinderwand gelangt und die wesentliche radiale Anpreßkraft durch den Spreizring (2) erzeugt ist, so dass ein 2- teiliges Ölabstreifkolbenringsystem gebildet ist und dass der Ring (3) eine konische Lauffläche (9) aufweist.

2. Ölabstreifkolbenring nach Anspruch 1, **dadurch gekennzeichnet, daß** der Spreizfederring (2) aus einem Federstahl besteht und mindestens die Innenflanken der Schenkel (7) gehärtet sind.

3. Ölabstreifkolbenring nach den Ansprüchen 1 und 2, **dadurch gekennzeichnet, daß** die axiale Höhe des Ringes (3) etwa der doppelten Materaldicke des Spreizringes (2) entspricht.

4. Ölabstreifkolbenring nach mindestens einem der Anspüche 1 bis 3, **dadurch gekennzeichnet, daß** der Ring (3) aus Federstahl besteht.

## Claims

1. Oil control ring consisting of a metal band curved in a ring shape with a U-shaped cross-sectional profile open radially outwards for use as a spreader ring and of an axially low, flat slotted ring, in particular for internal-combustion engines, wherein the spreader ring has incisions extending alternately from the longitudinal sides, thus forming radially directed resilient legs, which are connected to one another via webs, said legs (7) extending radially at least over half the depth of the ring (3), **characterised in that** the ring (3) is disposed with axial play in the range of 10 to 100 mm inside the space formed by the U-shaped cross-sectional profile in such a manner that when installed only the ring (3) moves into sliding contact with the cylinder wall and the essentially radial contact pressure is generated by the spreader ring (2) so that a 2-part oil control ring system is formed, and that the ring (3) has a conical running surface (9).

2. Oil control ring according to Claim 1, **characterised in that** the spreader ring (2) is made of spring steel and at least the inner flanks of the legs (7) are hardened.

3. Oil control ring according to Claims 1 and 2, **characterised in that** the axial height of the ring (3) corresponds to approximately double the material thickness of the spreader ring (2).

4. Oil control ring according to at least one of the Claims 1 to 3, **characterised in that** the ring (3) is made of spring steel.

## Revendications

1. Segment de piston racleur d'huile constitué à partir d'une bande métallique annulaire repliée comprenant un profil de section transversale en forme de U ouvert radialement vers l'extérieur pour être utilisé en tant qu'anneau d'écartement élastique et un anneau plat fendu axialement mince, en particulier pour moteurs à combustion interne, l'anneau d'écartement élastique comprenant des découpes s'étendant de manière alternée à partir des côtés longitudinaux de telle sorte que des branches élastiques dirigées radialement sont formées qui sont reliées les une aux autres par des brides, les branches s'étendant radialement au moins sur la moitié de la profondeur radiale de l'anneau (3), **caractérisé en ce que** l'anneau (3) est disposé à l'intérieur de l'espace formé par le profil de section transversale en forme de U avec un jeu axial situé dans le domaine allant de 10 à 100 micromètres, de telle sorte qu'à l'état monté seulement l'anneau (3) vient en contact de glissement avec la paroi de cylindre et que la force de pression sensiblement radiale est obtenue par l'anneau d'écartement (2) de telle sorte qu'un système de segment de piston racleur d'huile à deux pièces est formé et que l'anneau (3) comprend une surface de course conique (9).

2. Segment de piston racleur d'huile selon la revendication 1, **caractérisé en ce que** l'anneau d'écartement élastique (2) est réalisé à partir d'un acier à ressort et qu'au moins les flancs internes des branches (7) sont durcis.

3. Segment de piston racleur d'huile selon la revendication 1 ou 2, **caractérisé en ce que** la hauteur axiale de l'anneau (3) correspond environ au double de l'épaisseur de paroi de l'anneau d'écartement (2).

4. Segment de piston racleur d'huile selon au moins des revendications 1 à 3, **caractérisé en ce que** l'anneau (3) est réalisé à partir d'un acier à ressort.
